**Europäisches Patentamt**

**European Patent Office**

**Office européen des brevets**

(19)

(11) Veröffentlichungsnummer: **0 012 281**
A1

(12) # EUROPÄISCHE PATENTANMELDUNG

(21) Anmeldenummer: **79104775.6**

(22) Anmeldetag: **29.11.79**

(51) Int. Cl.³: **H 04 L  11/00**, H 04 Q  3/54,
G 11 C  9/00

(30) Priorität: **08.12.78  DE 2853138**

(71) Anmelder: **SIEMENS AKTIENGESELLSCHAFT,
Postfach 22 02 61, D-8000 München 22 (DE)**

(43) Veröffentlichungstag der Anmeldung: **25.06.80**
**Patentblatt 80/13**

(84) Benannte Vertragsstaaten: **AT BE CH DE FR GB IT LU
NL SE**

(72) Erfinder: **Haensel, Eckhart, Reichenaustrasse 33,
D-8000 München 60 (DE)**

(54) **Verfahren und Schaltungsanordnung zur Vermittlung und Abgabe von Signalen in bzw. von einer speicherprogrammierten Vermittlungsanlage.**

(57)  Die Erfindung betrifft ein Verfahren und eine Schaltungsanordnung zur Vermittlung und Abgabe von Signalen in bzw. von einer speicherprogrammierten Vermittlungsanlage mit einer Vielzahl von Signale zuführenden Zubringerkanälen und Signale wegführenden Abnehmerkanälen. Dabei sollen die Signale betreffende Vermittlungsaufträge und Übertragungsaufträge durch Aufruf und Abwicklung von Bearbeitungsprogrammen so abgewickelt werden, daß eine die Bearbeitungsprogramme den einzelnen Kanälen zuteilende Steuereinrichtung möglichst wenig belastet ist. Zu diesem Zweck werden die einzelnen Kanäle bezeichnende Adressen in einer gesonderten Adressierungseinrichtung jeweils für die gesamte Dauer der Abwicklung eines Bearbeitungsprogramms bereitgehalten. Die Hauptanwendung der Erfindung liegt auf dem Gebiet der speicherprogrammierten Vermittlungsanlagen.

EP 0 012 281 A1

SIEMENS AKTIENGESELLSCHAFT          Unser Zeichen
Berlin und München                  VPA 78 P 2411 EUR

Verfahren und Schaltungsanordnung zur Vermittlung und Abgabe von Signalen in bzw. von einer speicherprogrammierten
Vermittlungsanlage

Die Erfindung bezieht sich auf ein Verfahren und eine
Schaltungsanordnung zur Vermittlung und Abgabe von Signalen in bzw. von einer speicherprogrammierten Vermittlungsanlage mit einer Vielzahl von Signale in ankommender
Übertragungsrichtung zuführenden Zubringerkanälen und mit
einer Vielzahl von Signale in abgehender Übertragungsrichtung wegführenden Abnehmerkanälen, wobei die Signale betreffende Vermittlungsaufträge und Übertragungsaufträge
durch Aufruf und Abwicklung von Bearbeitungsprogrammen
ausgeführt werden, die den einzelnen, von einer Steuereinrichtung her adressierbaren Kanälen zugeteilt werden.

Ein Verfahren und eine Schaltungsanordnung der vorstehend
bezeichneten Art sind bereits bekannt (DT-PS 12 94 420).
Bei diesem bekannten Verfahren und der zur Durchführung
dieses Verfahrens dienenden Schaltungsanordnung werden
die einzelnen Bearbeitungsprogramme bezüglich der Ver-

Nt 1 Fra / 3.10.1979

- 2 -     VPA 78 P 2411 EUR

mittlung von Signalen dadurch ausgeführt, daß einer in der eigentlichen speicherprogrammierten Vermittlungsanlage enthaltenen zentralen Steuereinrichtung Anforderungssignale von Eingabecodewandlern her zugeführt werden, mit denen die Zubringerkanäle verbunden sind. Die Ausführung der Bearbeitungsprogramme für die Abgabe von Signalen über Abnehmerkanäle wird ebenfalls von der zentralen Steuereinrichtung her veranlaßt. Dies bedeutet, daß in der zentralen Steuereinrichtung relativ häufig die Adressen von Zubringerkanälen und Abnehmerkanälen zu ermitteln bzw. bereitzustellen sind. Dabei ist es im Zuge der Abwicklung eines Bearbeitungsprogramms häufig erforderlich, ein und dieselbe Adresse während einer relativ langen Zeitspanne ständig abzugeben, um nämlich sämtliche Bearbeitungsschritte bezüglich des durch die genannte Adresse bezeichneten Kanals auszuführen. Zuweilen ist es aber auch erforderlich, auf ein und dieselbe Adresse zu unterschiedlichen Zeitpunkten zuzugreifen. Dies ist insbesondere dann der Fall, wenn zwischen derartigen Zeitpunkten von der zentralen Steuereinrichtung Verarbeitungsvorgänge auszuführen sind, wie z.B. die Bewertung von Signalen, die über einen Zubringerkanal zugeführt worden sind. Insgesamt ergibt sich somit ein zeitraubender Betrieb für die Steuereinrichtung hinsichtlich der Ermittelung bzw. Bereitstellung der die einzelnen Kanäle bezeichnenden Adressen. Dadurch ist insgesamt die Leistungsfähigkeit der zentralen Steuereinrichtung und damit auch der diese enthaltenden speicherprogrammierten Vermittlungsanlage relativ stark begrenzt, wenn man nicht einen entsprechend hohen Schaltungsaufwand für diese Steuereinrichtung vorsieht.

Der Erfindung liegt nun die Aufgabe zugrunde, einen Weg zu zeigen, wie bei der oben betrachteten Vermittlung und Abgabe von Signalen in bzw. von einer speicherprogrammierten Vermittlungsanlage die die einzelnen Zubringerkanäle und Abnehmerkanäle bezeichnenden Adressen in besonders einfacher und dennoch wirksamer Weise bereitgestellt werden können, ohne daß dies einen relativ hohen Aufwand in der Steuereinrichtung erforderlich macht.

Gelöst wird die vorstehend aufgezeigte Aufgabe bei einem Verfahren der eingangs genannten Art erfindungsgemäß dadurch, daß die . Adressierung     ·der einzelnen Kanäle  dadurch vorgenommen wird, daß lediglich auf das Auftreten eines Vermittlungsauftrags hin zunächst eine irgendeinen Zubringerkanal und irgendeinen Abnehmerkanal gemeinsam bezeichnende Kanal-Nummer für die gesamte Dauer der Abwicklung eines Bearbeitungsprogramms zur Ausführung eines gegebenenfalls vorhandenen Vermittlungsauftrags und eines gegebenenfalls vorhandenen Übertragungsauftrags für diese beiden Kanäle von einer gesonderten Adressierungseinrichtung bereitgestellt wird und daß nach Abwicklung des Bearbeitungsprogramms für diese beiden Kanäle nacheinander die die übrigen Kanäle entsprechend bezeichnenden Kanal-Nummern zur Ausführung von gegebenenfalls vorhandenen Vermittlungsaufträgen und gegebenenfalls vorhandenen Übertragungsaufträgen von der Adressierungseinrichtung jeweils gesondert bereitgestellt werden.

Die Erfindung bringt den Vorteil mit sich, daß sie durch eine besonders einfache Verfahrensweise die Bearbeitungsprogramme unter relativ geringer Belastung der Steuereinrichtung hinsichtlich der Bezeichnung der Zubringerkanäle und Abnehmerkanäle auszuführen gestattet. Dabei bringt schon die Bereitstellung jeweils ein und derselben Kanal-Nummer für irgendeinen Zubringerkanal und irgendeinen Abnehmerkanal insgesamt eine Herabsetzung der Belastung der Steuereinrichtung hinsichtlich der Bereitstellung entsprechender Adressen bzw. Kanal-Nummern mit sich. Durch die Bereitstellung der jeweiligen Kanal-Nummer für die Dauer der jeweiligen Abwicklung eines Bearbeitungsprogramms wird überdies in vorteilhafter Weise sichergestellt, daß die Steuereinrichtung hinsichtlich der Bereitstellung der Adressen bzw. Kanal-Nummern jeweils nur ein einziges Mal in Anspruch genommen werden muß, so daß also insgesamt eine besonders zeitarme Inanspruchnahme der Steuereinrichtung vorliegt. Die Steuereinrichtung kann somit in vorteilhafter Weise zur Ausführung von weiteren Aufgaben herangezogen werden.

Zweckmäßigerweise werden nach Auftreten eines die Abwicklung eines Vermittlungsauftrages in wenigstens einem Zubringerkanal anfordernden Meldesignals nacheinander sämtliche Zubringerkanäle und Abnehmerkanäle in einer festgelegten Reihenfolge bezüglich der Ausführung von Vermittlungs- bzw. Übertragungsaufträgen überprüft, wobei sämtliche Vermittlungsaufträge und sämtliche Übertragungsaufträge in der Reihenfolge der Bedienung der einzelnen Kanäle ausgeführt werden. Hierdurch ergibt sich der Vorteil einer besonders einfachen Verfahrensweise zur Ermittelung von Vermittlungs- bzw. Übertragungsaufträgen.

Zur Durchführung des Verfahrens gemäß der Erfindung ist es zweckmäßig, eine Schaltungsanordnung mit einer speicherprogrammierten Vermittlungsanlage zu verwenden, an der eine Vielzahl von Signale in ankommender Übertragungsrichtung zuführenden Zubringerkanälen und eine Vielzahl von Signale in abgehender Übertragungsrichtung wegführenden Abnehmerkanälen angeschlossen sind, wobei die Vermittlung und die Übertragung von Signalen über die Zubringerkanäle bzw. über die Abnehmerkanäle unter der Steuerung durch eine Steuereinrichtung nach Maßgabe von Bearbeitungsprogrammen erfolgt, die die jeweils auszuführenden Bearbeitungsschritte festlegen. Diese Schaltungsanordnung ist erfindungsgemäß dadurch gekennzeichnet, daß die Bearbeitungsprogramme in einem gesonderten Speicher gespeichert sind, der mit einem Adressierungseingang am Ausgang einer gesonderten Adressierungseinrichtung angeschlossen ist, daß die Adressierungseinrichtung im Zuge der Bedienung sämtlicher Zubringerkanäle und sämtlicher Abnehmerkanäle jeweils für die Dauer der Abwicklung des einen Zubringerkanal und einen Abnehmerkanal betreffenden Verarbeitungsprogramms eine einzige, diese beiden Kanäle bezeichnende Kanal-Nummer (Adresse) ständig abgibt, und daß die Adressierungseinrichtung eingangsseitig am Ausgang der Steuereinrichtung angeschlossen ist, welche mit einem gesonderten Steuereingang an das Auftreten von Signalen in den Zubringerkanälen feststellenden Einrichtungen angeschlossen ist und welche die Kanal-Nummern der jeweiligen Zubringerkanäle und Abnehmerkanäle festzulegen vermag. Hierdurch ergibt sich der Vorteil eines relativ geringen schaltungstechnischen Aufwands für die jeweils erforderliche Bereitstellung der Kanal-Nummern im Zuge der Bedienung sämtlicher Zubringerkanäle und sämtlicher Abnehmerkanäle der Vermittlungsanlage.

Die Adressierungseinrichtung ist zweckmäßigerweise ein Register, welches zu Beginn der Abwicklung jedes Bearbeitungsprogramms für einen Zubringerkanal und einen Abnehmerkanal mit der diese Kanäle bezeichnenden Kanal-Nummer (Adresse) ladbar ist. Hierdurch ergibt sich der Vorteil eines besonders geringen schaltungstechnischen Aufwands für die Bereitstellung der jeweils erforderlichen Kanal-Nummern im Zuge der Bedienung der Zubringerkanäle und Abnehmerkanäle.

Der genannte gesonderte Speicher ist vorzugsweise als Pufferspeicher zumindest für Signale mitausgenutzt, die von der speicherprogrammierten Vermittlungsanlage abgegeben sind und die an die Abnehmerkanäle weiterzuleiten sind. Hierdurch ergibt sich der Vorteil eines besonders geringen schaltungstechnischen Aufwands hinsichtlich der Weiterleitung von Signalen an in Frage kommende Abnehmerkanäle.

Anhand einer Zeichnung wird die Erfindung nachstehend an einem Ausführungsbeispiel näher erläutert.

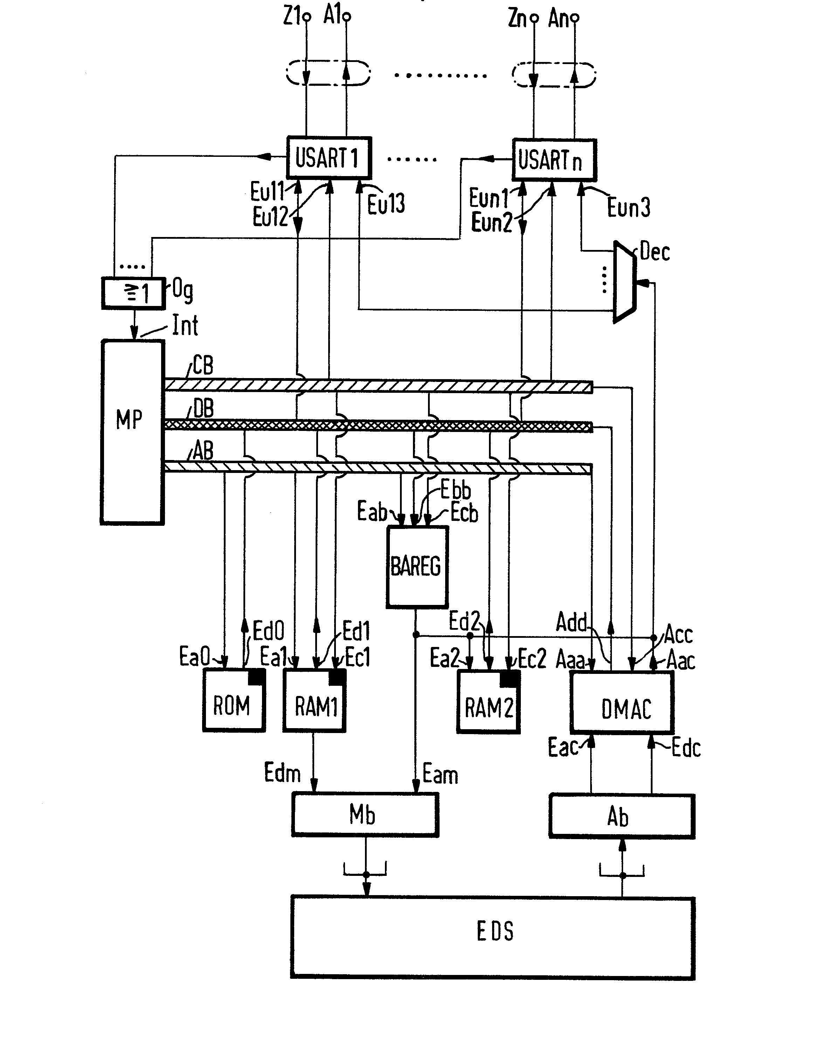

Die Zeichnung zeigt in einem Blockschaltbild eine Schaltungsanordnung gemäß der Erfindung, die zwischen Signale in ankommender Übertragungsrichtung zuführenden Zubringerkanälen Z1 bis Zn sowie Signale in abgehender Übertragungsrichtung wegführenden Abnehmerkanälen A1 bis An einerseits und einer speicherprogrammierten Vermittlungsanlage EDS andererseits vorgesehen ist. Diese speicherprogrammierte Vermittlungsanlage EDS kann eine an sich bekannte Vermittlungsanlage sein (siehe "Der Fernmeldeingenieur", Mai 1972, Heft 5; Druckschrift "Siemens-System EDS-System Description", Ref. No. F234/150.18.101 von 1977). Diese bekannte speicherprogrammierte Vermittlungsanlage arbeitet im Prinzip in der Weise, daß sie ihr über Zubringerkanäle zugeführte Signale nach Maßgabe von Adressen bzw. Kanal-Nummern an in Frage kommende Abnehmerkanäle weiterleitet. Die betreffenden Kanal-Nummern bzw. Adressen sind dabei in Speicherzellen eines der speicherprogrammierten Vermittlungsanlage zugehörigen Speichers enthalten. Dabei ist jedem Zubringerkanal eine derartige Speicherzelle zugehörig. Die Vermittlungsvorgänge werden in der speicherprogrammierten Vermittlungsanlage EDS im übrigen nach dem Prinzip des Meldens von Vermittlungsaufträgen und der Abgabe von Aufträgen zur Weiterleitung von Signalen durchgeführt. Zu diesem Zweck ist die speicherprogrammierte Vermittlungsanlage EDS eingangsseitig an den Ausgängen von Meldungspuffern angeschlossen, deren einer in der Zeichnung mit Mb angedeutet ist. Ausgangsseitig ist die speicherprogrammierte Vermittlungsanlage EDS mit Auftragspuffern verbunden, deren einer in der Zeichnung mit Ab angedeutet ist.

Die in der Zeichnung dargestellte, zwischen Zubringer- kanälen und Abnehmerkanälen einerseits und der speicherprogrammier- ten Vermittlungsanlage EDS andererseits vorgesehene Schaltungsanordnung enthält eine Steuereinrichtung, die die einzelnen erforderlichen Bearbeitungsvorgänge steuert. Diese Steuereinrichtung ist im vorliegenden Fall durch einen Mikroprozessor MP gebildet, bei dem es sich beispielsweise um einen Mikroprozessor mit der Bezeichnung Intel SAB8085 handeln kann. In der Zeichnung ist dieser Mikroprozessor MP als ein einen Eingang Int und drei Busleitungen AB, DB, CB enthaltender Mikroprozessor veranschaulicht. Der Eingang Int ist ein Unterbrechungseingang, dem Signale zur Unterbrechung eines von dem Mikroprozessor MP gerade abgewickelten Vorgangs zuführbar sind. Die Busleitung AB ist eine sogenannte Adreßbusleitung; die Busleitung DB ist eine Datenbusleitung, und die Busleitung CB ist eine Steuerbusleitung. Die erwähnten Busleitungen weisen jeweils eine Mehrzahl von einzelnen Leitungen auf.

Die bereits erwähnten Zubringerkanäle Z1 bis Zn und die ebenfalls bereits erwähnten Abnehmerkanäle A1 bis An – diese Kanäle mögen im vorliegenden Fall durch Leitungen gebildet sein - sind über Anschlußeinrichtungen USART1 bis USARTn mit der Datenbusleitung DB und mit der Steuerbusleitung CB des Mikroprozessors MP verbunden. Dabei sind die Anschlußeinrichtungen USART1 bis USARTn mit Anschlüssen Eu11 bzw. Eun1 an der Datenbusleitung DB und mit Anschlüssen Eu12 bzw. Eun2 an der Steuerbusleitung CB des Mikroprozessors MP angeschlossen. Wie ersichtlich, sind jeweils eine Zubringerleitung Z1 bzw. Zn und eine Abnehmerleitung A1 bzw. An mit einer der Anschlußeinrichtungen verbunden. Die betreffenden Anschlußeinrichtungen USART1 bis USARTn sind mit weiteren Anschlüssen Eu13 bzw. Eun3 am Ausgang eines Decoders Dec angeschlossen, der eingangsseitig am Ausgang eines Adreßregisters BAREG angeschlossen ist, auf das weiter unten noch näher eingegangen wird. Mit noch weiteren Anschlüssen sind die Anschlußeinrichtungen USART1 bis USARTn über ein ODER-Glied Og an dem Unterbrechungseingang Int des Mikroprozessors MP angeschlossen.

Mit der Adressenbusleitung AB ist ferner ein als Lesespeicher ausgebildeter Programmspeicher ROM mit seinem gegebenenfalls mehrere Anschlüsse aufweisenden Adresseneingang Ea0 verbunden. Mit einem Datenausgang Ed0 - der gegebenenfalls mehrere Ausgangsanschlüsse aufweist - ist der Programmspeicher ROM mit der Datenbusleitung DB verbunden. Aus diesem Programmspeicher ROM holt der Mikroprozessor MP die zur Ausführung von einzelnen Steuerungsvorgängen erforderlichen Steuerbefehle ab.

Mit der Adressenbusleitung AB ist ferner ein Datenspeicher RAM1 mit einem ebenfalls mehrere Anschlüsse aufweisenden Adresseneingang Ea1 verbunden. Dieser Datenspeicher RAM1, der ein Speicher mit wahlfreiem Zugriff ist, ist mit einem gegebenenfalls mit mehrere Anschlüsse aufweisenden Dateneingang Ed1 an der Datenbusleitung DB angeschlossen. Mit einem Steuereingang Ec1 ist der Speicher RAM1 an der Steuerbusleitung CB angeschlossen. Über diesen Steuereingang Ec1 werden dem Speicher RAM1 Steuersignale zugeführt, auf deren Auftreten hin entweder Signale in diesen Speicher RAM1 eingeschrieben oder aus diesem Speicher ausgelesen werden.

Der Datenspeicher RAM1 ist mit einem gesonderten Datenausgang (sog. Port) an einem Dateneingang Edm des bereits erwähnten Meldungspuffers Mb angeschlossen. Mit einem Adresseneingang Edm ist der Meldungspuffer Mb am Ausgang des bereits erwähnten Adreßregisters BAREG angeschlossen, welches als Adressierungseinrichtung ausgenutzt wird. Dieses Register BAREG ist mit einem gegebenenfalls mehrere Anschlüsse aufweisenden Adresseneingang Eab an der Adressenbusleitung AB angeschlossen; mit einem Dateneingang Ebb ist das Register BAREG an der Datenbusleitung DB angeschlossen und mit einem Steuereingang Ecb ist das Register BAREG an der Steuerbusleitung CB angeschlossen.

Mit dem Adressenausgang des Registers BAREG ist ferner ein gegebenenfalls mehrere Anschlüsse aufweisender Adressierungseingang Ea2 eines sogenannten Kanalblock-Datenspeichers RAM2 verbunden, bei dem es sich ebenfalls um einen Speicher mit wahlfreiem Zugriff handeln mag. Dieser Kanalblock-Datenspeicher RAM2 - dessen Funktion weiter unten noch näher ersichtlich werden wird - ist mit einem gegebenenfalls mehrere Einzelanschlüsse aufweisenden Datenanschluß Ed2 an der Datenbusleitung DB angeschlossen. Mit einem Steuereingang Ec2 ist der Speicher RAM2 an der Steuerbusleitung CB angeschlossen.

Der Kanalblock-Datenspeicher RAM2 ist mit seinem Adressierungseingang Ea2 ferner an einem Adressenausgang Aac einer einen direkten Speicherzugriff ermöglichenden Speicherzugriffs-Steuereinrichtung DMAC angeschlossen, der praktisch auch mit der Eingangsseite des oben bereits erwähnten Decoders Dec verbunden ist. Die Speicherzugriffs-Steuereinrichtung DMAC ist mit weiteren Anschlüssen Aaa, Add bzw. Acc an den bereits erwähnten Busleitungen AB, DB, CB angeschlossen. Mit einem Dateneingang Edc und mit einem Adressierungseingang Eac ist die Speicherzugriffs-Steuereinrichtung DMAC am Ausgang des oben bereits erwähnten Auftragspuffers Ab angeschlossen.

Bevor auf die Arbeitsweise der in der Zeichnung dargestellten Schaltungsanordnung eingegangen wird, sei zunächst darauf hingewiesen, daß unter Signalen hier digitale Signale (Nachrichtensignale, Steuersignale) verstanden werden, die entweder in Form von einzelnen Polaritätswechseln oder in Form von Bitgruppen (auch Envelopes genannt) auftreten.

Nunmehr wird die Arbeitsweise der in der Zeichnung dargestellten Schaltungsanordnung in dem für ein Verständnis der vorliegenden Erfindung ausreichenden Umfang erläutert. Dazu sei zunächst angenommen, daß von wenigstens einer der Anschlußeinrichtungen USART1 bis USARTn ein Meldesignal an den Unterbrechungseingang Int des Mikroprozessors MP abgegeben wird. Dieses Meldesignal zeigt an, daß über wenigstens eine der Zubringerleitungen Z1 bis Zn ein der speicherprogrammierten Vermittlungsanlage EDS zuzuführendes Signal zugeführt worden ist. Dieses Signal mag in einer der Anschlußeinrichtungen USART1 bis USARTn enthalten (gepuffert) sein. Der Mikroprozessor MP gibt auf das Auftreten dieses Meldesignals hin über die Adressenbusleitung AB in einem durch die Dauer der Bedienung der jeweiligen Zubringerleitung und der jeweiligen Abnehmerleitung festgelegten Rhythmus nacheinander Adressen und über die Steuerbusleitung CB jeweils ein solches Steuersignal ab, daß die zum jeweiligen Zeitpunkt auf der Datenbusleitung DB auftretende Dateninformation in das Register BAREG gelangt. Die betreffende Dateninformation bezeichnet als Adresse irgendeine Zubringerleitung und eine Abnehmerleitung, wie beispielsweise die Zubringerleitung Z1 und die Abnehmerleitung A1 - d.h. zwei Leitungen, die an einer der Anschlußeinrichtungen USART1 bis USARTn gemeinsam angeschlossen sind. Die betreffende Adresse stellt - generell ausgedrückt - eine Kanal-Nummer dar, die einen Zubringerkanal und einen Abnehmerkanal bezeichnet. Diese Adresse bzw. Kanal-Nummer gibt das Register BAREG ausgangsseitig bis zum Zeitpunkt seiner erneuten Ansteuerung ab. Mit Hilfe der betreffenden Adresse wird im vorliegenden Fall der Kanalblock-Datenspeicher RAM2
adressiert. Außerdem wird eine der Anschlußeinrichtungen USART1 bis USARTn über den Decoder Dec für
eine Signalübertragung freigegeben, und zwar in
beiden Übertragungsrichtungen.

In dem Kanalblock-Datenspeicher RAM2 werden nunmehr
für die Bedienung der in Frage kommenden Zubringerleitung und der zugehörigen Abnehmerleitung bereitgehaltene Speicherbereiche adressiert. Der Mikroprozessor MP als die Steuereinrichtung der dargestellten Schaltungsanordnung vermag zunächst aus
dem Kanalblock-Datenspeicher RAM2 für die Bedienung des zugehörigen Zubringerkanals und des zugehörigen Abnehmerkanals erforderliche Bedienungs-
und Steuerinformationen eines eigentlichen Bearbeitungsprogramms auszulesen (und zwar zerstörungsfrei) und sodann in entsprechend bereitgehaltenen
Speicherbereichen des Kanalblock-Datenspeichers
RAM2 Ergebnissignale zwischenzuspeichern, die
infoge der Bedienung des zugehörigen Zubringerkanals und Abnehmerkanals festzuhalten sind.

Im Zuge von Bedienungen der vorstehend erwähnten
Art werden die auf der jeweiligen Zubringerleitung aufgetretenen Signale und die über die jeweilige Abnehmerleitung zu übertragenden Signale
(auf diese Signale wird weiter unten noch näher
eingegangen) in für ihre jeweilige Weiterleitung
geeignete Formate gebracht. So werden die über
die jeweilige Zubringerleitung übertragenen Signale von Zusatzsignalelementen (Synchronisierbit, Statusbit) befreit, und den über die Abnehmerleitungen weiterzuleitenden Signalen werden entsprechende Zusatzsignalelemente hinzugefügt.
Bei der betreffenden Bedienung können ggfs.
auch Berechtigungen der einzelnen Zubringerleitungen und Abnehmerleitungen auf die Abgabe bzw.
Aufnahme von Signalen an bestimmte Abnehmerleitungen bzw. von bestimmten Zubringerleitungen
berücksichtigt werden. Schließlich können bei
der betreffenden Bedienung Steuersignale verarbeitet bzw. bearbeitet werden, die aufgenommen oder abzugeben sind. Alle diese Vorgänge
werden durch den Mikroprozessor MP nach Maßgabe
des jeweiligen Bearbeitungsprogramms gesteuert.

Der oben erwähnte Kanalblock-Datenspeicher wird
für die Aufnahme der bei der Abwickelung des jeweiligen Bearbeitungsprogramms erzielten Ergebnissignale als Pufferspeicher mitausgenutzt. Die
in dem Kanalblock-Datenspeicher RAM2 enthaltenen,
Zubringerleitungen betreffende Ergebnissignale
- die auf Grund der in den Anschlußeinrichtungen
USART1 bis USARTn gepufferten Signale gebildet
worden sind - werden dem Speicher RAM1 unter der
Steuerung durch den Mikroprozessor MP zugeführt,
um aus diesem an den Meldungspuffer Mb abgegeben
zu werden. Dem Meldungspuffer Mb werden somit Signale und jeweils eine Adresse zugeführt, woraufhin
dieser Meldungspuffer Mb an die speicherprogrammierte Vermittlungsanlage EDS jeweils einen entsprechenden
Vermittlungsauftrag abgibt, auf dessen Auftreten
hin die Vermittlung der betreffenden Signale ausgeführt wird.

Die Abnehmerleitungen betreffenden und über diese
weiterzuleitenden Ergebnissignale werden durch
Ausführung von entsprechenden Übertragungsaufträgen

gebildet. Diese Aufträge (sie umfassen Signale und Adressen) gelangen von der speicherprogrammierten Vermittlungsanlage EDS über den Auftragspuffer an die Speicherzugriffssteuereinrichtung DMAC; sie werden entsprechend den im Kanalblock-Datenspeicher RAM2 enthaltenen Bearbeitungsprogrammen ausgeführt. Die infolge dieser Programmausführung entstehenden Ergebnissignale werden in dem Kanalblock-Datenspeicher RAM2 zwischengespeichert, bevor sie an die jeweils in Frage kommende Abnehmerleitung weitergeleitet werden. Die jeweilige Abnehmerleitung ist dabei mit derjenigen Anschlußeinrichtung (USART1 bis USARTn) verbunden, die von dem Adreßregister BAREG noch freigegeben ist.

Nach Abwicklung der Bearbeitungsschritte für die beiden Kanäle (ein Zubringerkanal und ein Abnehmerkanal), die durch die in dem Register BAREG enthaltene Adresse bezeichnet sind, gibt der Mikroprozessor MP eine weitere Adresse über die Adreßbusleitung DB sowie ein entsprechendes Steuersignal über die Steuerbusleitung CB ab und gegebenenfalls eine weitere Dateninformation über die Datenbusleitung, um eine neue Adresse in dem Register BAREG abzuspeichern. Daraufhin werden für ein weiteres Kanal-Paar die vorstehend erläuterten Vorgänge ausgeführt. Auf diese Art und Weise werden insgesamt Bearbeitungsprogramme darstellende Bearbeitungsvorgänge für sämtliche Kanal-Paare nacheinander ausgeführt, wobei die Adressen(Dateninformationen) der Kanal-Paare jeweils nur kurzzeitig von dem Mikroprozessor MP bereitgestellt und dann in dem Register BAREG abgespeichert werden. Es sei an dieser Stelle bemerkt, daß es auch ohne weiteres möglich ist, eine in dem Register BAREG einmal eingespeicherte Adresse durch Zuführen allein eines Steuersignals zu diesem Register zu ändern. In diesem Fall genügt es also, eine Adresse in das Register BAREG lediglich ein einziges Mal im Zuge der Bedienung sämtlicher Kanal-Paare Z1, A1 bis Zn, An zu laden. Das betreffende Register kann in diesem Fall in besonders zweckmäßiger Weise als Zähler ausgebildet sein.

Im Zusammenhang mit der vorstehend erläuterten Bedienung der Kanal-Paare sei noch angemerkt, daß dabei vorzugsweise so vorgegangen wird, daß pro Kanal-Paar zunächst der Zubringerkanal und danach der Abnehmerkanal bedient wird. Dabei hat, wie vorstehend erläutert worden ist, lediglich das Auftreten von Signalen in Zubringerkanälen zur Folge, daß dem Mikroprozessor MP ein entsprechendes Meldesignal an seinen Unterbrechungseingang Int zugeführt wird. Das Auftreten von Signalen, die über Abnehmerkanäle bzw. Abnehmerleitungen weiterzuleiten sind, hat indessen keine derartige Auswirkung. Gibt die speicherprogrammierte Vermittlungsanlage EDS Signale ab, die über Abnehmerkanäle bzw. Abnehmerleitungen weiterzuleiten sind, so geschieht dies in der Weise, daß zunächst über die Speicherzugriffs-Steuereinrichtung DMAC ein direkter Speicherzugriff zu dem Kanalblock-Datenspeicher RAM2 erfolgt. In diesem Fall bewirkt die Speicherzugriffs-Steuereinrichtung DMAC durch Abgabe eines Steuersignals an die Steuerbusleitung CB, daß der Mikroprozessor MP gewissermaßen abgeschaltet wird, also keinerlei Steuerungsfunktionen über die Busleitungen ausführt. Die somit in die in Frage kommenden Speicherbereiche des Kanalblock-Datenspeichers über die Speicherzugriffs-Steuereinrichtung DMAC eingespeicherten Signale werden erst dann über die in Frage kommenden Anschlußeinrichtungen USART1 bis USARTn weitergeleitet, Wenn der Mikroprozessor MP entsprechende Adressen an das Register BAREG abgibt. Dies ist, wie oben ausgeführt, dann der Fall, wenn in wenigstens einem der Zubringerkanäle ein Signal auftritt, welches der speicherprogrammierten Vermittlungsanlage EDS zuzuführen ist. Durch die dann in dem Register BAREG enthaltenden Adressen werden im übrigen auch die Anschlußeinrichtungen USART1 bis USARTn nacheinander für eine Signalübertragung freigegeben. Dies geschieht über den Decoder Dec.

Nach der vorstehend erläuterten Arbeitsweise der in der Zeichnung dargestellten Schaltungsanordnung veranlassen also lediglich in den Zubringerkanälen Z1 bis Zn auftretende Signale, daß der Mikroprozessor MP Adressen in das Register BAREG lädt, durch die den einzelnen Zubringerkanälen und auch Abnehmerkanälen zugehörige Speicherbereiche des Kanalblock-Datenspeichers RAM2 adressiert werden. Die von der speicherprogrammierten Vermittlungsanlage EDS jeweils im Zuge von Übertragungsaufträgen abgegebenen Signale, die in Abnehmerkanälen weiterzuleiten sind, führen indessen lediglich dazu, daß sie in dem Kanalblock-Datenspeicher zunächst zwischengespeichert werden. Auf die Abgabe von entsprechenden Meldesignalen an den Unterbrechungseingang Int des Mikroprozessors MP konnte in diesem Fall - also bei Abgabe von Übertragungsaufträgen von der Vermittlungsanlage EDS - verzichtet werden, da die dabei auftretenden Signale im Kanalblock-Datenspeicher RAM2 zwischengespeichert werden können, also nicht verloren gehen. Es ist überdies möglich, von der Speicherzugriffs-Steuereinrichtung DMAC ein entsprechendes Steuersignal an die speicherprogrammierte Vermittlungsanlage EDS in dem Fall abzugeben, daß in dem Kanalblock-Datenspeicher RAM2 keine Speicherkapazität für die Zwischenspeicherung von Signalen mehr zur Verfügung steht. In diesem Fall hört die speicherprogrammierte Vermittlungsanlage EDS dann mit der Abgabe entsprechender Signale solange auf, bis der Kanalblock-
Datenspeicher RAM2 wieder für die Aufnahme von Signalen
bereitsteht. Dies wird dann der Fall sein, wenn in einem
der Zubringerkanäle ein entsprechendes Signal eingetroffen
ist und zur Abgabe eines entsprechenden Meldesignals an
den Unterbrechungseingang Int des Mikroprozessors MP geführt hat. Insgesamt ergibt sich durch diese Arbeitsweise
eine besonders geringe Belastung des Mikroprozessors MP
hinsichtlich der Bereitstellung von Adressen, durch welche die einzelnen Zubringerkanäle und Abnehmerkanäle bezeichnet sind.

Abschließend sei noch darauf hingewiesen, daß die in der
Zeichnung in Blockform dargestellten Einrichtungen  kommerziell erhältliche Einrichtungen sein können. So können
die Anschlußeinrichtungen USART1 bis USARTn Chips der
Firma Intel mit der Bezeichnung SAB8251A sein. Der Programmspeicher kann beispielsweise durch drei Chips der
Firma Intel mit der Bezeichnung SAB2716 gebildet sein,
der Datenspeicher RAM1 kann durch ein Chip der Firma
Intel mit der Bezeichnung SAB8155 gebildet sein, und
der Kanalblock-Datenspeicher kann durch zwei Chips der
Firma Intel mit der Bezeichnung SAB2114 gebildet sein.
Die Speicherzugriffs-Steuereinrichtung DMAC kann durch
zwei Chips der Firma Intel mit der Bezeichnung SAB8257-5
gebildet sein. Der Meldungspuffer Mb und der Auftragspuffer Ab könne jeweils durch eine Anzahl von Chips mit
der Bezeichnung MM67401 gebildet sein. Das als Adressierungseinrichtung verwendete Register BAREG kann durch
ein Chip mit der Bezeichnung SN74LS173 gebildet sein. Der
Decoder Dec kann durch ein Chip mit der Bezeichnung
SN74LS138 gebildet sein. Das ODER-Glied Og kann ein gewöhnliches Dioden-ODER-Glied sein. Bei Verwendung eines
Mikroprozessors der Firma Intel mit der Bezeichnung SAB8085A
lassen sich folgende Leistungsmerkmale mit der dargestellten Schaltungsanordnung erreichen: Bedienung von acht Zubringerkanälen und acht Abnehmerkanälen mit einer Bitrate von jeweils 2,4 kBit/s oder Bedienung von vier Zubringerkanälen und vier Abnehmerkanälen mit einer Bitrate von jeweils 4,8 kBit/s oder Bedienung von zwei Zubringerkanälen und zwei Abnehmerkanälen mit einer Bitrate von jeweils 9,6 kBit/s. Diese Zahlenangaben betreffen derzeit mögliche Bitraten, die in Verbindung mit einer speicherprogrammierten Vermittlungsanlage der eingangs genannten bekannten Art realisierbar sind. Da an einer speicherprogrammierten Vermittlungsanlage in der Regel mehr als die vorstehend bezeichnete Anzahl von Zubringerkanälen und Abnehmerkanälen angeschlossen sein wird, wird die in der Zeichnung dargestellte Schaltungsanordnung in einer entsprechenden Mehrzahl mit einer solchen speicherprogrammierten Vermittlungsanlage verbunden sein. Dies ist in der Zeichnung auch durch entsprechende Vielfachzeichen zwischen dem Meldungspuffer Mb bzw. dem Auftragspuffer Ab einerseits und der speicherprogrammierten Vermittlungsanlage EDS angedeutet.

5 Patentansprüche
1 Figur

Patentansprüche

1. Verfahren zur Vermittlung und Abgabe von Signalen in bzw. von einer speicherprogrammierten Vermittlungsanlage mit einer Vielzahl von Signale in ankommender Übertragungsrichtung zuführenden Zubringerkanälen und mit einer Vielzahl von Signale in abgehender Übertragungsrichtung wegführenden Abnehmerkanälen, wobei die Signale betreffende Vermittlungsaufträge und Übertragungsaufträge durch Aufruf und Abwicklung von Bearbeitungsprogrammen ausgeführt werden, die den einzelnen, von einer Steuereinrichtung her adressierbaren Kanälen zugeteilt werden, d a d u r c h   g e k e n n z e i c h n e t ,   daß die Adressierung der einzelnen Kanäle dadurch vorgenommen wird, daß lediglich auf das Auftreten eines Vermittlungsauftrages hin zunächst eine irgendeinen Zubringerkanal (z.B. Z1) und irgendeinen Abnehmerkanal (z.B. A1) gemeinsam bezeichnende Kanal-Nummer für die gesamte Dauer der Abwicklung eines Bearbeitungsprogramms zur Ausführung eines gegebenenfalls vorhandenen Vermittlungsauftrags und eines gegebenenfalls vorhandenen Übertragungsauftrags für diese beiden Kanäle von einer gesonderten Adressierungseinrichtung (BAREG) bereitgestellt wird, und daß nach Abwicklung des Bearbeitungsprogramms für diese beiden Kanäle nacheinander die die übrigen Kanäle entsprechend bezeichnenden Kanal-Nummern zur Ausführung von gegebenenfalls vorhandenen Vermittlungsaufträgen und gegebenenfalls vorhandenen Übertragungsaufträgen von der Adressierungseinrichtung (BAREG) jeweils gesondert bereitgestellt werden.

2. Verfahren nach Anspruch 1, d a d u r c h   g e - k e n n z e i c h n e t ,   daß nach Auftreten eines die Abwicklung eines Vermittlungsauftrages in wenigstens einem Zubringerkanal anfordernden Meldesignals nacheinander sämtliche Zubringerkanäle und Abnehmer-

0012281

kanäle in einer festgelegten Reihenfolge bezüglich der
Ausführung von Vermittlungs- bzw. Übertragungsaufträgen
überprüft werden und daß sämtliche Vermittlungsaufträge
und sämtliche Übertragungsaufträge in der Reihenfolge
der Bedienung der einzelnen Kanäle ausgeführt werden.

3. Schaltungsanordnung zur Durchführung des Verfahrens
nach Anspruch 1 oder 2, mit einer speicherprogrammierten Vermittlungsanlage, an der eine Vielzahl von Signale in ankommender
Übertragungsrichtung zuführenden Zubringerkanälen und
eine Vielzahl von Signale in abgehender Übertragungsrichtung wegführenden Abnehmerkanälen angeschlossen
sind, wobei die Vermittlung und die Übertragung von Signalen über die Zubringerkanäle bzw. über die Abnehmerkanäle unter der Steuerung durch eine Steuereinrichtung
nach Maßgabe von Bearbeitungsprogrammen erfolgt, die die
jeweils auszuführenden Bearbeitungsschritte festlegen,
d a d u r c h   g e k e n n z e i c h n e t ,   daß die
Bearbeitungsprogramme in einem gesonderten Speicher
(RAM2) gespeichert sind, der mit einem Adressierungseingang (Ea2) am Ausgang einer gesonderten Adressierungseinrichtung (BAREG) angeschlossen ist, daß die Adressierungseinrichtung (BAREG) im Zuge der Bedienung sämtlicher Zubringerkanäle (Z1 bis Zn) und sämtliche Abnehmerkanäle (A1 bis An) jeweils für die Dauer der Abwicklung des einen Zubringerkanals (z.B. Z1) und einen Abnehmerkanal (A1) betreffenden Verarbeitungsprogramms
eine einzige, diese beiden Kanäle (Z1, A1) bezeichnende
Kanal-Nummer (Adresse) ständig abgibt, und daß die Adressierungseinrichtung (BAREG) eingangsseitig am Ausgang der
Steuereinrichtung (MP) angeschlossen ist, welche mit
einem gesonderten Steuereingang (Int) an das Auftreten
von Signalen in den Zubringerkanälen (Z1 bis Zn) feststellenden Einrichtungen (USART1 bis USARTn) angeschlossen ist und welche die Kanal-Nummern der jeweiligen Zubringerkanäle und Abnehmerkanäle festzulegen vermag.

4. Schaltungsanordnung nach Anspruch 3, d a d u r c h g e k e n n z e i c h n e t , daß die Adressierungs- einrichtung (BAREG) ein Register ist, welches zu Beginn der Abwicklung jedes Bearbeitungsprogramms für einen Zubringerkanal (z.B. Z1) und einen Abnehmerkanal (A1) mit der diese Kanäle bezeichnenden Kanal-Nummer (Adresse) ladbar ist.

5. Schaltungsanordnung nach Anspruch 3 oder 4, d a - d u r c h   g e k e n n z e i c h n e t , daß der genannte gesonderte Speicher (RAM2) als Pufferspeicher zumindest für Signale mitausgenutzt ist, die von der speicherprogrammierten Vermittlungsanlage (EDS) abgegeben sind und die an Abnehmerkanäle (A1 bis An) weiter- zuleiten sind.

1/1

0012281

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| P | TELCOM REPORT, 2. Jahrgang, Heft 2, April 1979, Herausgegeben von der Siemens AG Berlin und München, <br><br> R. NAESSL und B. SCHAFFER "Das Siemens-System EDS in synchronen Datennetzen" <br><br> Seiten 111 bis 115 <br><br> + Seite 112, dritte Spalte, Zeile 8 bis Seite 115, dritte Spalte, Zeile 23; Bilder 3-5 + <br><br> -- | 1,3 |
| | SIEMENS ZEITSCHRIFT, 51. Jahrgang, Heft 2, Februar 1977, Herausgeber und Verlag: Siemens AG, Berlin und München, <br><br> E. MAIR, B. SCHAFFER und R. SCHUBERT "Struktur des Siemens-Systems EDS" <br><br> Seiten 82 bis 87 <br><br> + Seite 82, linke Spalte, Zeile 1 bis Seite 84, rechte Spalte, Zeile 11; Seite 85, linke Spalte, Zeile 25 bis Seite 87, linke Spalte, Zeile 8; Bilder 1-5 + <br><br> -- | 1,3 |
| D | DE - C - 1 294 420 (SIEMENS) <br><br> + Gesamt + <br><br> -- | 1,3 |
| | DE - B - 1 905 659 (SIEMENS) <br><br> + Spalte 1, Zeile 1 bis Spalte 4, Zeile 2; Fig. 1 + <br><br> -- | 1,3 |

**KLASSIFIKATION DER ANMELDUNG (Int.Cl.)³**

H 04 L 11/00
H 04 Q 3/54
G 11 C 9/00

**RECHERCHIERTE SACHGEBIETE (Int. Cl.)³**

H 04 L 11/00
H 04 L 5/00
H 04 Q 3/54
G 11 C 9/00
G 06 F 13/00

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patent-familie, übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| WIEN | 29-02-1980 | HAJOS |

| | EINSCHLÄGIGE DOKUMENTE | | KLASSIFIKATION DER ANMELDUNG (Int.Cl.) 3 |
|---|---|---|---|
| Kategorie | Kennzeichnung des Dokuments mit Angabe, soweit erforderlich, der maßgeblichen Teile | betrifft Anspruch | |
| | GB - A - 1 487 501 (COMPAGNIE INDUSTRIELLE DES TELECOMMUNICATIONS CITALCATEL)<br><br>+ Seite 1, Zeile 1 bis Seite 3, Zeile 60; Zeichnung +<br><br>---- | 1,3 | |
| | | | RECHERCHIERTE SACHGEBIETE (Int. Cl.) 3 |